# EUROPEAN PATENT APPLICATION

(11) **EP 3 796 598 A1**
(43) Date of publication of application: **24.03.2021**
(21) Application number: 19822827.2
(22) Date of filing: 27.05.2019
(51) Int. Cl.: H04L 12/24, H04L 12/26, H04L 29/08

(54) **NODE SWITCHING METHOD, NETWORK NODE, NETWORK SYSTEM, AND STORAGE MEDIUM**

(30) Priority: 21.06.2018 CN 201810644723
(71) Applicant: ZTE Corporation, shenzhen Guangdong 518057 (CN)
(72) Inventor: YANG, Kun, Shenzhen, Guangdong 518057 (CN); LU, Chen, Shenzhen, Guangdong 518057 (CN); XIE, Fang, Shenzhen, Guangdong 518057 (CN)
(74) Representative: Mozzi, Matteo
(86) International application number: PCT/CN2019/088656
(87) International publication number: WO 2019/242459

(57) **Abstract**

A node switching method, a network node, a network system and a storage medium are provided. The method includes: validity of a current backup center node of a network is determined, wherein the validity is used for representing whether degree of variation of a weighted average of the current backup center node is within a preset range; when determining that the current backup center node is valid, local data is transferred to the backup center node; after transfer of the local data is completed, a first center node switching notification is sent to one or more nodes in the network, wherein the first center node switching notification is used for indicating that the current backup center node becomes a current center node of the network.

## Description

### Cross-Reference to Related Applications

The present application is based upon and claims priority to Chinese patent application No. 201810644723.3, filed on June 21, 2018, the present disclosure of which is hereby incorporated by reference in its entirety.

### Technical Field

The present disclosure relates to, but is not limited to, the field of communications, in particular to a node switching method, a network node, a network system and a storage medium.

### Background

With the gradual expansion of the application scope of Internet of Things (IoT) technologies, more and more "ubiquitous/IoT networks" with large geographical span have appeared. In order to cover these ubiquitous networks with large span, it is usually necessary to use multiple gateways to collect and transmit data simultaneously. On the other hand, due to the complex environment of ubiquitous/IoT network, a terminal device is usually unattended, so there is unstable communication situation. In order to improve the reliability of information transmission and meet the needs of IoT applications, cooperative nodes are usually needed to realize redundant backup and recovery of data, so as to promote efficient network data transmission, realize network security and communication reliability, and meet the core content of specific application requirements.

In a multi-gateway cooperative system, a center node is responsible for analyzing the network topology and selecting the cooperative node for each node in the network according to analysis results. In the selection of the center node, a wireless sensor network or a wireless Ad Hoc network is considered with the main purpose to select the center node to provide communication services for other nodes, so the energy value, power and bandwidth of the node are the main factors of selecting the center node. Moreover, due to the instability of the wireless network itself, the center node bearing the communication services will consume a lot of energy, so the center node needs to be replaced frequently. When proposing these solutions, situations that are not limited to wireless networks and require large amounts of storage and computation are not taken into account. Therefore, there is a scenario that the whole network needs a stable center node to process the selection of cooperative nodes, and after the center node is selected, this node will undertake the work required by selecting the cooperative nodes for all nodes in the network, until the change of network topology causes the change of the center node.

In the related art, factors such as validity and security are not taken into account when a backup center node is switched. An original center node just transfers the services directly to the backup center node. However, the state of the backup center node may change, such as becoming unsuitable as the center node.

### Summary

In view of the above problem, the embodiments of the present disclosure provide a node switching method, a network node, a network system and a storage medium.

The embodiments of the present disclosure provide a node switching method, which includes the following operations. Validity of a current backup center node of a network is determined, wherein the validity is used for representing whether degree of variation of a weighted average of the current backup center node is within a preset range. When it is determined that the current backup center node is valid, local data is transferred to the backup center node. After transfer of the local data is completed, a first center node switching notification is sent to one or more nodes in the network, wherein the first center node switching notification is used for indicating that the current backup center node becomes a current center node of the network.

The embodiments of the present disclosure also provide a node switching method, which includes the following operations. A center node switching notification sent by an original center node is received. A center node switching request is sent to the original center node. The center node switching request is used for indicating to make a current node become a center node of a network when the current node is valid.

The embodiments of the present disclosure also provide a network node, which includes a determining module, a transferring module and a switching module. The determining module is configured to determine validity of a current backup center node of a network. The validity is used for representing whether degree of variation of a weighted average of the current backup center node is within a preset range. The transferring module is configured to, when determining that the current backup center node is valid, transfer the local data to the backup center node. The switching module is configured to, after transfer of the local data is completed, send the first center node switching notification to one or more nodes in the network. The first center node switching notification is used for indicating that the current backup center node becomes a current center node of the network.

The embodiments of the present disclosure also provide another network node, which includes a receiving module and a sending module. The receiving module is configured to receive a center node switching notification sent by an original center node. The sending module is configured to send a center node switching request to the original center node. The center node switching request is used for indicating to make a current node become a center node of a network when the current node is valid.

The embodiments of the present disclosure also provide a network system, which includes an original center node and a backup center node. The original center node includes a determining module, a transferring module and a switching module. The determining module is configured to determine validity of the backup center node of a network. The validity is used for representing whether degree of variation of a weighted average of the backup center node is within a preset range. The transferring module is configured to, when determining that the backup center node is valid, transfer the local data to the backup center node. The switching module is configured to, after transfer of the local data is completed, send a first center node switching notification to one or more nodes in the network. The first center node switching notification is used for indicating that the backup center node becomes a current center node of the network.

The backup center node includes a receiving module and a sending module. The receiving module is configured to receive a center node switching notification sent by the original center node. The sending module is configured to send a center node switching request to the original center node. The center node switching request is used for indicating to make the backup center node become a center node of the network when the backup center node is valid.

The embodiments of the present disclosure also provide a storage medium. The storage medium stores a computer program. The computer program is configured to perform the node switching method at runtime.

The embodiments of the present disclosure also provide an electronic device, which includes a memory and a processor. The memory stores a computer program. The processor is configured to run the computer program to perform the node switching method.

Through the embodiments of the present disclosure, center node switching is performed when the backup center node is determined to be valid, which solves the technical problem of the related art of poor effectiveness and safety in the process of switching the center node of the network, and improves the stability of the network.

### Brief Description of the Drawings

Fig. 1 is a network architecture diagram according to the embodiments of the present disclosure.
Fig. 2 is a flowchart of a node switching method according to an embodiment of the present disclosure.
Fig. 3 is a flowchart of another node switching method according to an embodiment of the present disclosure.
Fig. 4 is a structure diagram of a network node according to an embodiment of the present disclosure.
Fig. 5 is a structure diagram of another network node according to an embodiment of the present disclosure.

### Detailed Description of the Embodiments

The present disclosure is elaborated below with reference to the accompanying drawings and embodiments. It is to be noted that the embodiments in the application and characteristics in the embodiments may be combined if there is no conflict.

It is to be noted that the terms like "first" and "second" in the specification, claims and accompanying drawings of the present disclosure are used for differentiating similar objects, but are not used to specify a specific order or sequence.

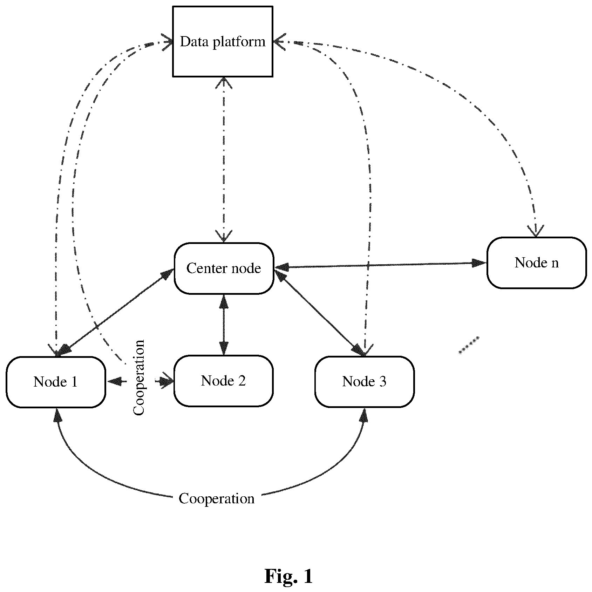

The embodiments of the present application may be applied to the network architecture shown in Fig. 1. Fig. 1 is a network architecture diagram according to the embodiments of the present disclosure. As shown in Fig. 1, the network architecture includes: multiple nodes (node 1 to node n), a center node, a data platform and so on. The center node interacts with the other nodes.

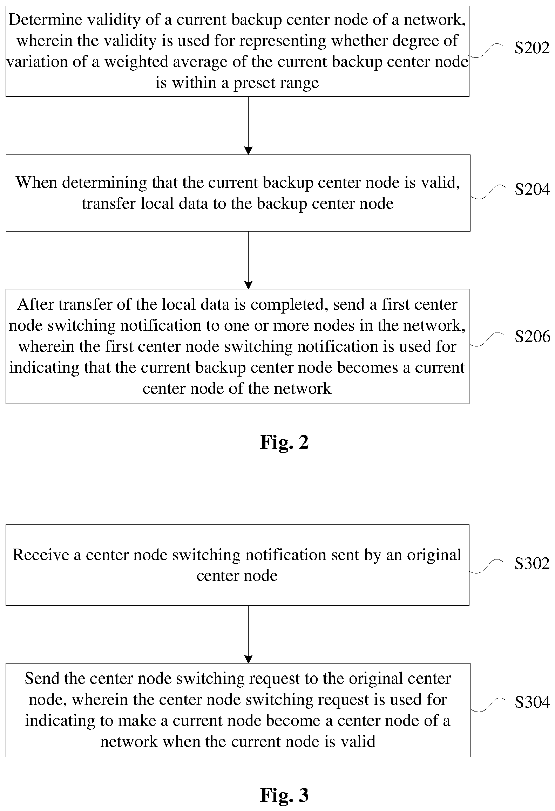

In an embodiment, a node switching method that can be implemented on the network architecture is provided. Fig. 2 is a flowchart of a node switching method according to an embodiment of the present disclosure. As shown in Fig. 2, the flow includes the following operations.

At S202, validity of a current backup center node of a network is determined, wherein the validity is used for representing whether degree of variation of a weighted average of the current backup center node is within a preset range.

At S204, when it is determined that the current backup center node is valid, local data is transferred to the backup center node.

At S206, after transfer of the local data is completed, a first center node switching notification is sent to one or more nodes in the network, wherein the first center node switching notification is used for indicating that the current backup center node becomes a current center node of the network.

Through the above operations, center node switching is performed when the current backup center node is determined to be valid, which solves the technical problem of the related art of poor effectiveness and safety in the process of switching the center node of the network, and improves the stability of the network.

In some embodiments, the executer of the above operations may be, but is not limited to be, a terminal, a communication node, a gateway and so on. The present embodiment may be applied to ubiquitous/IoT application scenarios such as smart home system, Internet of vehicles system, smart city system, etc.

In some embodiments, when it is determined that the current backup center node is invalid, a center node of the network is re-determined. In some embodiments, the operation that the center node of the network is determined may include that: the center node and the backup center node of the network are re-determined.

In some embodiments, the weighted average is used for reflecting appropriateness of a node in the network as the center node, and the weighted average of any node is determined based on a node state of the node.

In some embodiments, the operation that the local data is transferred to the current backup center node may include that: the local data is transferred to the current backup center node through a secure channel.

In some embodiments, the operation that the validity of the current backup center node of the network is determined may include the following operations.

At S11, a second center node switching notification is sent to the current backup center node.

At S12, a center node switching request fed back by the current backup center node is received, wherein the center node switching request carries a current weighted average of the current backup center node.

At S13, a locally saved cached weighted average of the current backup center node is obtained.

At S14, it is determined whether the degree of variation between the current weighted average and the cached weighted average is within the preset range. A difference value may be obtained by comparing the current weighted average with the cached weighted average, and it is considered that the degree of variation is not within the preset range if the difference value is too large or too small.

At S15, when the degree of variation is within the preset range, the current backup center node is determined to be valid; when the degree of variation is not within the preset range, the current backup center node is determined to be invalid.

In some embodiments, when the backup center node is determined to be valid, the method may further include that: a center node switching acceptance notification is sent to the current backup center node. When the backup center node is determined to be invalid, the method may further include that: a center node switching rejection notification is sent to the current backup center node.

In some embodiments, the operation that the second center node switching notification is sent to the current backup center node includes that: a locally saved node identity of the current backup center node is obtained; and the second center node switching notification is sent to the current backup center node according to the node identity.

In some embodiments, the first center node switching notification carries a node identity of the current backup center node.

In the present embodiment, another node switching method that can be implemented on the network architecture is provided. Fig. 3 is a flowchart of another node switching method according to an embodiment of the present disclosure. As shown in Fig. 3, the flow includes the following operations.

At S302, a center node switching notification sent by an original center node is received.

At S304, a center node switching request is sent to the original center node, wherein the center node switching request is used for indicating to make a current node become a center node of a network when the current node is valid.

The current node is the node (the backup center node) where the executer of the above operations is located. The solution of the present embodiment is explained from the perspective of the backup center node.

In some embodiments, before the center node switching request is sent to the original center node, the method may further include the following operations: a current weighted average of the current node is calculated and then carried in the center node switching request. In the embodiments, the current weighted average is used for determining validity of the current node.

Based on the description of the above embodiments, a person skilled in the art can clearly understand that the methods according to the described embodiments may be implemented by means of software in connection with the required general-purpose hardware platform, and of course, can also be implemented by hardware, but in many cases the former is a more preferred implementation. Based on this understanding, the essence of the technical solutions in the embodiments of the present disclosure or the contributions to current technical solutions may be implemented in the form of software products. Such software product may be stored in a computer storage medium (such as a Read-Only Memory/Random Access Memory (ROM/RAM), a magnetic disk, or an optical disk) and include one or more computer-readable instructions which enables a terminal device (such as a cell phone, a personal computer, a server, or a network device) to implement the methods in the embodiments of the present disclosure.

The embodiments also provide a device, which is configured to implement the above embodiments and exemplary implementations. The embodiments and exemplary implementations that have been elaborated will not be repeated here. The term "module" used below can realize a combination of software and/or hardware with an intended function. Although the device described in the following embodiment is preferably realized through software, the realization through hardware or a combination of software and hardware is possible and conceivable.

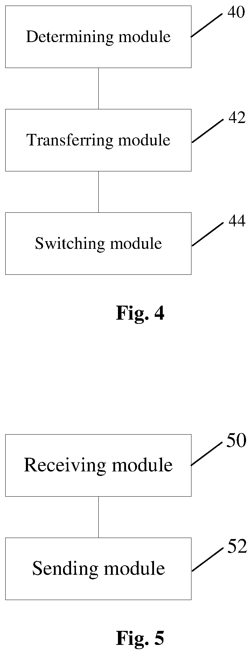

Fig. 4 is a structure diagram of a network node according to an embodiment of the present disclosure. As shown in Fig. 4, the device includes a determining module 40, a transferring module 42 and a switching module 44.

The determining module 40 is configured to determine validity of a current backup center node of a network. The validity is used for representing whether degree of variation of a weighted average of the current backup center node is within a preset range.

The transferring module 42 is configured to, when determining that the current backup center node is valid, transfer the local data to the backup center node.

The switching module 44 is configured to, after transfer of the local data is completed, send the first center node switching notification to one or more nodes in the network. The first center node switching notification is used for indicating that the current backup center node becomes a current center node of the network.

Fig. 5 is a structure diagram of another network node according to an embodiment of the present disclosure. As shown in Fig. 5, the device includes a receiving module 50 and a sending module 52.

The receiving module 50 is configured to receive a center node switching notification sent by an original center node.

The sending module 52 is configured to send a center node switching request to the original center node. The center node switching request is used for indicating to make a current node become a center node of a network when the current node is valid.

The original center node is the current center node of the network. The current node is the backup center node (equivalent to a target node) which is to become the center node.

The embodiments also provide a network system, which at least includes the network node shown in Fig. 4 and the network node shown in Fig. 5.

It is to be noted that, each of the above modules may be realized by software or hardware. For the latter, the above modules may be, but not limited to be, realized in the following way: all of the above modules are in the same processor; or, the above modules are respectively in different processors in any combination form.

The solution of the embodiments may be applied to a network in which a relationship between the center node and cooperative nodes has been determined, and each node needs to upload related data to the data platform. Each node has up to two cooperative nodes. The cooperative nodes can monitor each other's alive status and back up related data of each other. The center node is any specified node in the network and has all functions of a normal node as well as a specific function of assigning a cooperative relationship of all nodes in the network according to the network topology and other information.

Any gateway in the network can obtain its own weighted average and determine a gateway with the largest weighted average in the network as the center gateway of the network. The weighted average is used for reflecting the appropriateness of a gateway in the network as the center gateway, and the weighted average of any gateway is determined based on a node state of the node.

After the center gateway of the network is determined, a current center gateway of the network determines the gateway, whose weighted average is less than the weighted average of the current center gateway, as a backup center gateway in the network. The backup center gateway is used to serve as the center gateway of the network in the event that the current center gateway cannot work.

When the center gateway of the network is switched, the validity of the current backup center gateway of the network needs to be determined, that is, whether the variation of the weighted average of the current backup center gateway is within a preset range of variation is determined. When the current backup center gateway is determined to be valid, the current center gateway of the network transfers the related data to the current backup center gateway through a secure channel, and after the transfer of the related data is completed, sends a center gateway switching notification to the gateway in the network, so as to indicate that the current backup center gateway becomes the center gateway of the network. When the current backup center gateway is determined to be invalid, the center gateway of the network is re-determined.

The center node of the network locally caches the weighted average and the node identity of the backup center node or the backup center node and other nodes in the network. When the center node is switched, the original center node needs to determine the validity of the backup center node, and transfers the related data of the original center node to the backup center node through a secure channel. After the transfer of data is completed, the original center node sends a center node switching notification to other nodes in the network. When the original center node or the backup center node is offline due to failure, the network will restart a center node selection function.

The present embodiment provides a center node switching method. The flow of the center node switching method includes the following operations.

At S101, when a center node needs to be switched, an original center node retrieves locally a cached node identity of a backup center node and sends a center node switching notification to the backup center node.

At S102, after receiving the center node switching notification, the backup center node calculates a current weighted average of the backup center node, and sends a center node switching request including the current weighted average to the original center node.

It is to be noted that any node of the network determines the weighted average of the node based on node parameters indicating the node state of the node. The node parameters include storage capacity, operation speed, average bandwidth, and working stability.

At S103, after receiving the center node switching request, the original center node retrieves locally the cached weighted average of the backup center node, and determines whether the current weighted average and the cached weighted average of the backup center node are within a preset range of fluctuation.

At S 104a, if the current weighted average and the cached weighted average of the backup center node are within the preset range of fluctuation, the original center node sends a center node switching acceptance to the backup center node, and then S105a is executed.

At S 104b, if the current weighted average and the cached weighted average of the backup center node are not within the preset range of fluctuation, the original center node sends a center node switching rejection to the backup center node, and then S105b is executed.

At S 105a, after receiving the center node switching acceptance, the backup center node waits for the original center node to perform data transfer, and then S106 is executed.

At S 105b, the original center node triggers a center node selection function of the network, and then S101 is executed.

At S106, the original center node transfers the related data to the backup center node through an encrypted channel, wherein the related data includes the cached weighted average and the node identity of the backup center node of the network, or the cached weighted average and the node identity of the backup center node and other nodes.

At S107, after the transfer of the related is completed, the original center node sends a center node switching confirmation to the other nodes of the network, wherein the center node switching confirmation includes the node identity of the backup center node.

For the problems in the related art of security and effectiveness in the switching process of the center node of the network, the solution puts forward a network center node switching method. According to the method, at least the problems of security and effectiveness in the switching process of the center node of the network are solved.

An embodiment of the present disclosure also provides a storage medium, which stores a computer program. The computer program is configured to perform the operations of the node switching method at runtime.

In some embodiments, the storage medium may be configured to store a computer program for performing the following operations.

At S1, validity of a current backup center node of a network is determined, wherein the validity is used for representing whether degree of variation of a weighted average of the current backup center node is within a preset range.

At S2, when it is determined that the current backup center node is valid, the local data is transferred to the backup center node.

At S3, after transfer of the local data is completed, the first center node switching notification is sent to one or more nodes in the network, wherein the first center node switching notification is used for indicating that the current backup center node becomes a current center node of the network.

In some embodiments, the storage media may include, but is not limited to, a USB flash disk, an ROM, an RAM, a mobile hard disk, a magnetic disk, a compact disc, and other medium capable of storing the computer program.

An embodiment of the present disclosure also provides an electronic device, which includes a memory and a processor. The memory stores a computer program. The processor is configured to run the computer program to perform the operations of the node switching method.

In some embodiments, the electronic device may also include a transmission device and an input/output device. The transmission device is connected with the processor, and the input/output device is connected with the processor.

In some embodiments, the processor may be configured to perform the following operations through the computer program.

At S1, validity of a current backup center node of a network is determined, wherein the validity is used for representing whether degree of variation of a weighted average of the current backup center node is within a preset range.

At S2, when it is determined that the current backup center node is valid, the local data is transferred to the backup center node.

At S3, after transfer of the local data is completed, the first center node switching notification is sent to one or more nodes in the network, wherein the first center node switching notification is used for indicating that the current backup center node becomes a current center node of the network.

It is apparent that those skilled in the art should appreciate that the above modules and operations of the present disclosure may be implemented by a general-purpose computing device, and they may be centralized in a single computing device or distributed on a network composed of multiple computing devices. In some embodiments, the modules and operations may be implemented by a program code which is capable of being executed by a computing device, so that the modules and operations may be stored in a storage device and executed by the computing device. In some situations, the presented or described operations may be executed in an order different from that described here; or the presented or described operations may be made into integrated circuit modules, respectively; or multiple modules and operations may be made into a single integrated circuit module. Therefore, the present disclosure is not limited to any particular combination of hardware and software.

The above is only the exemplary embodiments of the present disclosure and not intended to limit the present disclosure. For those skilled in the art, the present disclosure may have various modifications and changes. Any modifications, equivalent replacements, improvements and the like within the principle of the present disclosure should fall within the protection scope of the claims of the present disclosure.

## Claims

1. A node switching method, comprising:
determining validity of a current backup center node of a network, wherein the validity is used for representing whether degree of variation of a weighted average of the current backup center node is within a preset range;
when determining that the current backup center node is valid, transferring local data to the backup center node; and
after transfer of the local data is completed, sending a first center node switching notification to one or more nodes in the network, wherein the first center node switching notification is used for indicating that the current backup center node becomes a current center node of the network.

2. The method as claimed in claim 1, further comprising:
when determining that the current backup center node is invalid, re-determining a center node of the network.

3. The method as claimed in claim 1, wherein the weighted average is used for reflecting appropriateness of a node in the network as the center node, and the weighted average of any node is determined based on a node state of the node.

4. The method as claimed in claim 1, wherein transferring the local data to the current backup center node comprises:
transferring the local data to the current backup center node through a secure channel.

5. The method as claimed in claim 1, wherein determining the validity of the current backup center node of the network comprises:
sending a second center node switching notification to the current backup center node;
receiving a center node switching request fed back by the current backup center node, wherein the center node switching request carries a current weighted average of the current backup center node;
obtaining a locally saved cached weighted average of the current backup center node;
determining whether the degree of variation between the current weighted average and the cached weighted average is within the preset range;
when the degree of variation is within the preset range, determining that the current backup center node is valid; and when the degree of variation is not within the preset range, determining that the current backup center node is invalid.

6. The method as claimed in claim 5, wherein when determining that the backup center node is valid, the method further comprises:
sending a center node switching acceptance notification to the current backup center node.

7. The method as claimed in claim 5, wherein when determining that the backup center node is invalid, the method further comprises:
sending a center node switching rejection notification to the current backup center node.

8. The method as claimed in claim 5, wherein sending the second center node switching notification to the current backup center node comprises:
obtaining a locally saved node identity of the current backup center node; and
sending the second center node switching notification to the current backup center node according to the node identity.

9. The method as claimed in claim 1, wherein the first center node switching notification carries a node identity of the current backup center node.

10. The method as claimed in claim 1, wherein the one or more nodes are one or more terminals or gateways.

11. A node switching method, comprising:
receiving a center node switching notification sent by an original center node; and
sending a center node switching request to the original center node, wherein the center node switching request is used for indicating to make a current node become a center node of a network when the current node is valid.

12. The method as claimed in claim 11, wherein before sending the center node switching request to the original center node, the method further comprises:
calculating a current weighted average of the current node, wherein the current weighted average is used for determining validity of the current node, and is carried in the center node switching request.

13. A network node, comprising:
a determining module, configured to determine validity of a current backup center node of a network, wherein the validity is used for representing whether degree of variation of a weighted average of the current backup center node is within a preset range;
a transferring module, configured to, when determining that the current backup center node is valid, transfer local data to the backup center node; and
a switching module, configured to, after transfer of the local data is completed, send a first center node switching notification to one or more nodes in the network, wherein the first center node switching notification is used for indicating that the current backup center node becomes a current center node of the network.

14. A network node, comprising:
a receiving module, configured to receive a center node switching notification sent by an original center node; and
a sending module, configured to send a center node switching request to the original center node, wherein the center node switching request is used for indicating to make a current node become a center node of a network when the current node is valid.

15. A network system, comprising: an original center node and a backup center node, wherein the original center node comprises:
a determining module, configured to determine validity of the backup center node of a network, wherein the validity is used for representing whether degree of variation of a weighted average of the backup center node is within a preset range;
a transferring module, configured to, when determining that the backup center node is valid, transfer local data to the backup center node; and
a switching module, configured to, after transfer of the local data is completed, send a first center node switching notification to one or more nodes in the network, wherein the first center node switching notification is used for indicating that the backup center node becomes a current center node of the network;
the backup center node comprises:
a receiving module, configured to receive a center node switching notification sent by the original center node; and
a sending module, configured to send a center node switching request to the original center node, wherein the center node switching request is used for indicating to make the backup center node become the current center node of the network when the backup center node is valid.

16. A storage medium, storing a computer program, wherein the computer program is configured to perform the node switching method as claimed in any one of claims 1 to 12 at runtime.

17. An electronic device, comprising a memory and a processor, wherein the memory stores a computer program, and the processor is configured to run the computer program to perform the node switching method as claimed in any one of claims 1 to 12.

18. A network node, comprising:
a memory, configured to store a node switching program; and
a processor, configured to run the node switching program, wherein the node switching program is configured to perform the node switching method as claimed in any one of claims 1 to 10 at runtime.

19. A storage medium, comprising a stored program, wherein the program is configured to perform the node switching method as claimed in any one of claims 1 to 10 at runtime.
